# EUROPÄISCHE PATENTSCHRIFT

(11) **EP 2 315 643 B1**
(45) Veröffentlichungstag und Bekanntmachung des Hinweises auf die Patenterteilung: **26.10.2011**
(21) Anmeldenummer: 08803074.7
(22) Anmeldetag: 18.08.2008
(51) Int. Cl.: B23Q 11/00, B24B 55/10

(54) **STAUBAUFFANGBEHÄLTER FÜR EINE HANDWERKZEUGMASCHINE**
DUST COLLECTION CONTAINER FOR A HAND POWER TOOL
RÉCIPIENT COLLECTEUR DE POUSSIÈRE POUR UNE MACHINE-OUTIL PORTATIVE

(43) Veröffentlichungstag der Anmeldung: 04.05.2011
(73) Patentinhaber: Robert Bosch GmbH, 70442 Stuttgart (DE)
(72) Erfinder: BLUM, Jens, 70794 Filderstadt (DE); ROEHM, Heiko, 70176 Stuttgart (DE); HEBER, Andreas, 70794 Filderstadt (DE)
(86) Internationale Anmeldenummer: PCT/EP2008/060784
(87) Internationale Veröffentlichungsnummer: WO 2010/020271

(56) Entgegenhaltungen:
- EP-A- 0 558 253
- EP-A- 1 428 619
- EP-A- 1 661 661
- EP-A- 1 849 555
- DE-A1- 10 244 085

## Beschreibung

### Stand der Technik

Die Erfindung geht aus von einem Staubauffangbehälter für eine Handwerkzeugmaschine nach dem Oberbegriff des Anspruchs 1.

Eine bekannte Staubbox mit einem an dem Staubausblasstutzen einer Handwerkzeugmaschine lösbar befestigbaren Staubeinblasstutzen (DE 199 24 547 A1) besitzt einen mit einem Deckel staubdicht verschließbaren Behälterunterteil, in dem der Staubeinblasstutzen mit einer Staubeinblasöffnung mündet. Der Deckel ist mit einer Vielzahl von kreisrunden Luftaustrittslöchem versehen. Die Unterseite des Deckels ist mit einem als Faltenfilter aus Spezialpapier ausgebildeten Filterelement belegt. Im Behälterunterteil ist eine Staubsammelkammer ausgebildet und ein der Staubeinblasöffnung in Staubeinblasrichtung nachgeordnetes Luftleitelement angeordnet. Das Luftleitelement ist als Quersteg ausgebildet, der in einen sich über den Boden und die beiden einander gegenüberliegenden Seitenwänden des Behälterunterteils erstreckenden Rahmen eingeschoben ist und etwa bis zur Mittenhöhe der Staubeinblasöffnung reicht. Dieser Quersteg soll den über die Staubeinblasöffnung einströmenden, staubbeladenen Luftstrom beruhigen und Verwirbelungen vermeiden, um so ein Zusetzen des Filterelements durch aufgewühlten Staub zu verhindern. Außerdem wird durch den Quersteg der in der Staubsammelkammer aufgefangene und abgelagerte Staub festgehalten und kann bei Bewegen der abgeschalteten Handwerkzeugmaschine nicht in die Handwerkzeugmaschine zurückfallen.

Ein bekannter Staubauffangbehälter für eine Handwerkzeumaschine (EP 1 849 555 A1) weist eine kreisrunde Staubeinblasöffnung, eine Staubsammclkammer, ein der Staubeinblasöffnung in Staubeinblasrichtung nachgeordnetes Luftleitelement mit Umlenkgeometrie und ein Filterelement mit einer Anströmfläche auf. Der Staubauffangbehälter besitzt einen becherförmigen Behälterunterteil und einen den Behälterunterteil staubdicht verschließenden, tassenförmigen Deckel, in dem eine zentrale Luftaustrittsöffnung ausgebildet ist. Die von einem Staubcinblasstutzen zum staubdichten Aufsetzen auf einen Staubausblasstutzcn der Handwerkzeugmaschine umschlossene Staubeinblasöffnung ist im Boden des becherförmigen Behälterunterteils angeordnet und das Luftleitelement im Behälterunterteil bodennah festgesetzt. Das zentral im Becherunterteil angeordnete und endseitig in den tassenförmigen Deckel hineinragende Filterelement ist als Hohlzylinder oder als hohler Kegelstumpf ausgeführt, dessen eine Stirnseite von dem Luftleitelement abgedeckt ist und dessen andere Stirnseite deckungsgleich mit der zentralen Luftaustrittsöffnung im Deckel ist. Zwischen dem Behälterunteitei und dem Deckel einerseits und der zylindrischen bzw. kegelstumpfförmigen Filterwand des Filterelements andererseits verbleibt ein Ringraum, in den der über die Staubeinblasöffnung eintretende, staubbeladene Luftstrom über das Luftleitelement eingeleitet wird. Der Luftstrom streicht tangential am Filterelement entlang und strömt durch die Filterwand hindurch zur zentralen Luftaustrittsöffnung im Deckel, wobei sich der Staub in der von dem Ringraum gebildeten Slaubsammelkammer, die sich über Behälterunterteil und Deckel erstreckt, absetzt.

### Offenbarung der Erfindung

Der erfindungsgemäße Staubauffangbehälter mit den Merkmalen des Anspruchs 1 hat den Vorteil, dass durch die der Staubeintrittsöffnung nachgeordnete, strömungsoptimierte Umlenkgeometrie der über die Staubeinblasöffnung eintretende, staubbeladene Luftstrom ohne Strömungsumkehr hin zum Filterelement mit minimaler Strömungsgeschwindigkeitsveränderung umgelenkt wird. Das durch die Umlenkgeometrie erzielte direkte Anströmen des Filterelements behindert zudem einen Staubbelagaufbau am Filterelement. Das in der Staubsammelkammer zur Verfügung stehende Staubsammelvolumen kann zum Staubauffangen maximal genutzt werden. Das Luftleitelement mit Umlenkgeometrie verhindert außerdem das Zurückfallen von Staub in die Handwerkzeugmaschine nach deren Ausschalten.

Durch die in den weiteren Ansprüchen aufgeführten Maßnahmen sind vorteilhafte Weiterbildungen und Verbesserungen des im Anspruch 1 angegebenen Staubauffangbehälters möglich.

Gemäß einer vorteilhaften Ausführungsform der Erfindung liegt zwischen der umlaufenden Oberkante des Behälterunterteils und der damit passgenau umlaufenden Unterkante des haubenförmig ausgebildeten Deckels ein Dichtelement ein, das mittels eines zwischen Behälterunterteil und Deckel wirksamen, lösbaren Spannverschlusses kraftschlüssig zwischen Behälterunterteil und Deckel eingepresst ist. Der nach Art eines Spannverschlusses ausgebildete Verschluss erlaubt ein kontrolliertes Öffnen und Schließen des Deckels und nach Öffnen ein leichtes Trennen von Deckel und Gehäuse zwecks Entleeren der im Behälterunterteil ausgebildeten Staubsammelkammer. Da Behälterunterteil und Deckel selbst keine Dichtfunktion besitzen müssen, sondern diese von der eingelegten Dichtung übernommen wird, ist eine freie Materialwahl für Deckel und Behälterunterteil bezüglich steifen oder quasi steifen Werkstoff möglich.

Gemäß einer vorteilhaften Ausführungsform der Erfindung ist der Deckel an seinem von der Einhängenase abgekehrten vorderen Ende in am Behälterunterteil ausgebildeten Rasthaken eingehängt. Der Deckel wird in die Rasthaken am Behälterunterteil eingeschwenkt und dann mittels des schnallenartigen Spannverschlusses unter Pressung der Dichtung auf die Kanten von Behälterunterteil und Deckel geschlossen. Wird der Spannverschluss geöffnet, federn Deckel und Behälterunterteil leicht auseinander, so dass der Deckel durch Ausschieben der Rastausnehmungen aus den Rasthaken leicht vom Behälterunterteil abgenommen werden kann.

### Kurze Beschreibung der Zeichnungen

Die Erfindung ist anhand eines in den Zeichnungen dargestellten Ausführungsbeispiels in der nachfolgenden Beschreibung näher erläutert. Es zeigen jeweils in schematischer Darstellung:
- Fig. 1: einen Längsschnitt eines auf einen abschnittweise dargestellten Staubausblasstutzen einer Handwerkzeugmaschine aufgeschobenen zweiteiligen Staubauffangbehälters mit Behälterunterteil und Deckel,
- Fig. 2: einen Schnitt des Behälterunterteils längs der Linie II - II in Fig. 1,
- Fig. 3: eine perspektivische Draufsicht des Behälterunterteils in Fig. 1,
- Fig. 4: ausschnittweise eine perspektivische Ansicht des vom Staubausblasstutzen der Handwerkzeugmaschine abgezogenen Staubauffangbehälters in Fig. 1.

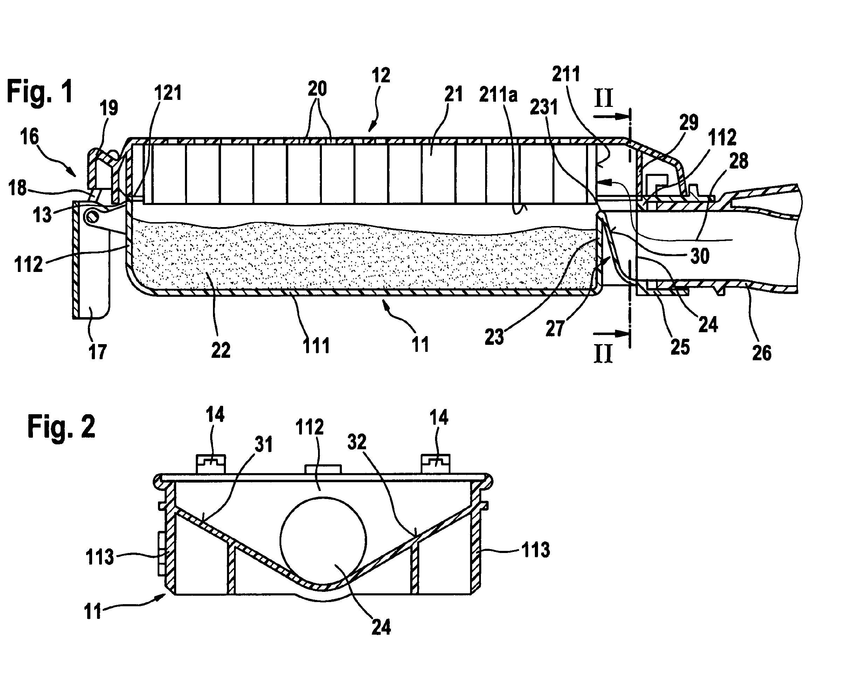

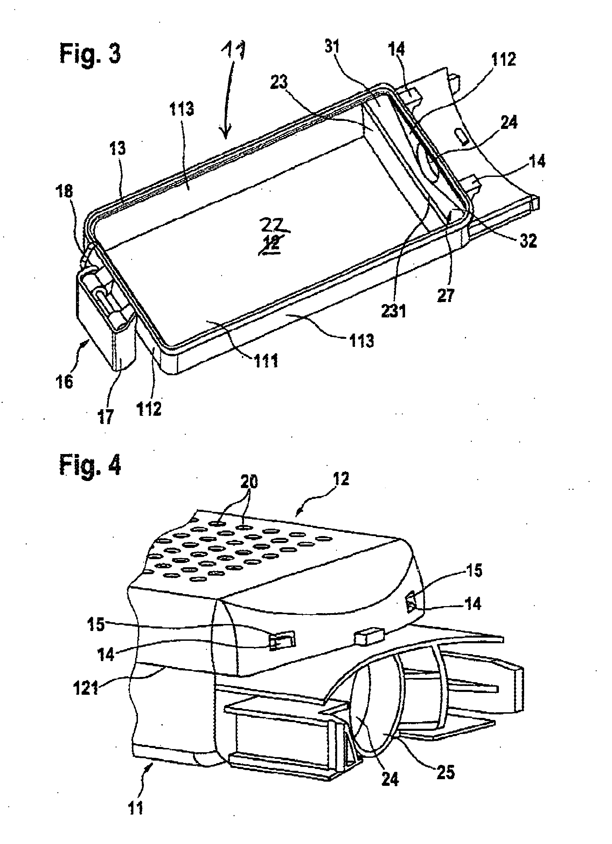

Der in Fig. 1 im Längsschnitt dargestellte Staubauffangbehälter für eine spanende, schleifende oder sägende Handwerkzeugmaschine ist zweiteilig ausgeführt und weist einen Behälterunterteil 11 und einen den Behälterunterteil staubdicht abdeckenden, kappenförmigen Deckel 12 auf, der den Behälterunterteil 11 staubdicht verschließt und vom Behälterunterteil 11 abnehmbar ist. Der in Fig. 3 perspektivisch dargestellte Behälterunterteil 11 weist einen Boden 111 und jeweils zwei einstückig vom Boden 111 abstehende Stirnwände 112 und Seitenwände 113 auf. Auf der umlaufenden Oberkante von Stirnwänden 112 und Seitenwänden 113 ist eine Dichtung 13 aufgelegt, auf die sich der kappenförmige Deckel 12 mit seinem umlaufenden Kappenrand 121 aufsetzt. Zum kraftschlüssigen Aufspannen des Deckels 12 auf den Behälterunterteil 11 sind an der vorderen Stirnwand 112 des Behälterunterteils 11 zwei Rasthaken 14 vorgesehen, die mit in der Stirnseite des Deckels 12 angeordneten Rastausnehmungen 15 zusammenwirken (Fig. 4), und ist an der hinteren Stirnwand des Behälterunterteils 11 ein Verschlusselement eines Spannverschlusses 16 angeordnet, der mit einem am Deckel 12 angeordneten Verschlusselement zusammenwirkt. Im Ausführungsbeispiel ist das am Behälterunterteil 11 angeordnete eine Verschlusselement des Spannverschlusses 16 als ein an der hinteren Stirnwand 112 des Behälterunterteils 11 schwenkbar gehaltener Spannhebel 17 mit Spannbügel 18 und das am Deckel 12 angeordnete andere Verschlusselement des Spannverschlusses 16 als Einhängenase 19 für den Spannbügel 18 ausgebildet. In der in Fig. 1 dargestellten Schließlage des Spannverschlusses 16 erzeugt der Spannbügel 18 an der Einhängenase 19 eine zum Behälterunterteil 11 gerichtete Spannkraft, die den mit seinen Rastausnehmungen 15 in die Rasthaken 14 des Behälterunterteils 11 eingreifenden Deckel 12 auf die Dichtung 13 aufpresst. Zum Abnehmen des Deckels 12 ist der Spannhebel 17 in Fig. 1 im Uhrzeigersinn um ca. 90° zu schwenken, wonach der Spannbügel 18 von der Einhängenase 19 abgenommen werden kann. Der Deckel 12 federt leicht nach oben und kann aus den Rasthaken 14 ausgeschoben und vom Behälterunterteil 11 entfernt werden.

Wie aus Fig. 1 und Fig. 4 ersichtlich ist, ist der Deckel 12 mit einer Vielzahl von kreisrunden Luftaustrittslöchern 20 versehen. Die Unterseite des Deckels 12 ist mit einem vorzugsweise als Faltenfilter ausgebildeten Filterelement 21 belegt, das den gesamten Lochbereich des Deckels 12 überdeckt. Vorzugsweise reicht der Faltenfilter nicht über den unteren Kappenrand 121 des Deckels 12 hinaus, um den Faltenfilter vor Beschädigung zu schützen. Im Abstand vor der Stirnfläche 211 des Filterelements 21, die die Lufteintrittsfläche für den staubbeladenen Luftstrom bildet, ist im Deckel 12 eine Querwand 29 angeordnet, die an den Kappenseitenwänden und am Kappenboden des Deckels 12 anliegt und bis zum Kappenrand 121 reicht. Im Bereich zwischen der Stirnfläche 211 des Filterelements 21 und der Querwand 29 ist der Kappenboden zumindest teilweise zur Querwand 29 hin abfallend abgeschrägt. Unterhalb des Filterelements 21 ist im Behälterunterteil 11 eine Staubsammelkammer 22 ausgebildet, die von der hinteren Stirnwand 112 und einer vom Boden 111 abstehenden Trennwand 23 sowie den beiden Seitenwänden 113 begrenzt ist. Die Abmessungen der Staubsammelkammer 22 und des Filterelements 21 sind annähernd gleich, so dass der im Filterelement 21 anfallende Staub ausschließlich in die Staubsammelkammer 22 abfällt. Bei geschlossenem Deckel 12 liegt die vordere Stirnfläche 211 des Filterelements 21 oberhalb der Staubsammelkammer 22 unmittelbar an der Trennwand 23, wobei die obere Begrenzungskante 231 der Trennwand 23 nahe der Unterkante 211a der Stirnfläche 211 des Filterelements 21 liegt, und die Querwand 29 im Deckel 12 fluchtet mit vorderen Stirnwand 112 des Behälterunterteils 11. Zur Erzielung einer kürzeren Bauform kann die vordere Stirnfläche 211 des Filterelements 21 vor die Trennwand 23 verlegt werden, wobei nach wie vor die obere Begrenzungskante 231 der Trennwand 23 unterhalb der Unterkante 211a der Stirnfläche 211 verbleibt. Wird alternativ die obere Begrenzungskante 231 der Trennwand 23 nach oberhalb der Unterkante 211a der Stirnfläche 211 verlagert und die Stirnfläche 211 hinter die Trennfläche 23 verlegt, so wird eine geringere Bauhöhe des Staubauffangbehälters erreicht.

In der vorderen Stirnwand 112 des Behälterunterteils 11 ist eine Staubeinblasöffnung 24 ausgebildet (Fig. 2 und 4), die von einem einstückig an dem Behälterunterteil 11 angeformten Staubeinblasstutzen 25 (Fig. 1 und 4) umschlossen ist. Der Staubeinblasstutzen 25 ist so ausgebildet, dass er auf einen Staubausblasstutzen 26 der Handwerkzeugmaschine (Fig. 1) aufschiebbar und lösbar befestigt ist, wobei die Verbindung der beiden Stutzen 25, 26 staubdicht erfolgt.

Im Behälterunterteil 11 ist zwischen der die Staubeinblasöffnung 24 aufweisenden Stirnwand 112 und der Trennwand 23 ein Luftleitelement 27 angeordnet, das an der oberen Begrenzungskante 231 der Trennwand 23 einstückig in die Trennwand 23 übergeht. Das Luftleitelement 27 besitzt eine strömungsoptimierte Umlenkgeometrie, die bei minimaler Reduzierung der Strömungsgeschwindigkeit des aus dem Staubausblasstutzen 26 über die Staubeinblasöffnung 24 einströmenden Luftstroms den durch die Form der Staubeinblasöffnung 24 bedingten Eintrittsquerschnitt des Luftstroms in einen an die Form der Anströmfläche des Filterelements 21 angepassten Austrittsquerschnitt transformiert. Eintrittsquerschnitt und Austrittsquerschnitt sind dabei in der gleichen Größenordnung gehalten. Im dargestellten Ausführungsbeispiel ist die Staubeinblasöffnung 24 kreisrund und die Anströmfläche des Filterelements 21 rechteckig, so dass eine Transformation des Querschnitts des Luftstroms von kreisförmig auf rechteckförmig erfolgt. Hierzu ist die Umlenkgeometrie des Luftleitelements 27 von drei aneinandergrenzenden Luftleitflächen 30, 31, 32 gebildet, die alle an der die Staubeinblasöffnung 24 aufweisenden Stirnwand 112 des Behälterunterteils 11 ansetzen und von der Unterkante der Staubeinblassöffnung 24 aus in drei rechtwinklig zueinander ausgerichteten Richtungen schräg nach oben verlaufen. Von den drei Luftleitflächen 30, 31, 32 erstreckt sich eine erste Luftleitfläche 30 in Richtung der Achse der Staubeinblassöffnung 24 hin zur oberen Begrenzungskante 231 der Trennwand 23 und damit hin zur Unterkante 211a der Stirnfläche 211 des Filterelements 21. Im unteren, an der Stirnwand 112 ansetzenden Bereich ist die erste Luftleitfläche 30 parabelartig gekrümmt. Die beiden anderen Luftleitflächen 31, 32 verlaufen an der Stirnwand 112 des Behälterunterteils 11 entlang mit nach oben zunehmendem, quer zur Achse der Staubeinblasöffnung 24 sich erstreckendem Querabstand voneinander (Fig. 1, 2 und 3). Die oberen Enden der drei Luftleitflächen 30, 31, 32 bilden die obere Bcgrcnzungskante des Luftleitelements 27, die zusammen mit der oberen Begrenzungskante der die Staubeinblasöffnung 24 aufweisenden Stirnwand 112 des Behälterunterteils 11 den Austrittsquerschnitt des Luftstroms festlegen. Die obere Begrenzungskante des Luftleitelements 27 liegt dabei mindestens so hoch über den Boden 11 des Behälterunterteils 11, dass sie mit der Oberkante der Staubeinblasöffnung 24 fluchtet. Der von der Handwerkzeugmaschine über ihren Staubausblasstutzen 26 ausgeblasene Luftstrom, in Fig. 1 durch Pfeil 28 symbolisiert, tritt durch die Staubeinblasöffnung 24 in den Behälterunterteil 11 ein und wird durch das Luftleitelement 27 mit Umlenkgeometrie auf die Stirnfläche 211 des Filterelements 21 geleitet. Der Strömungswiderstand, den das Luftleitelement 27 dem Luftstrom entgegensetzt, ist durch die Umlenkgeometrie minimal.

## Patentansprüche

1. Staubauffaugbehäher für eine Handwerkzeugmaschine, mit einer kreisrunden Staubeinblasöffnung (24), mit einem eine Anströmfläche aufweisenden Filterelement (21), mit einer Staubsammelkammer (22) und mit einem der Staubeinblasöffnung (24) in Staubeinblasrichtung nachgeordneten Luftleitelement (27) mit einer Umlenkgeometrie für den über die Staubeinblasöffnung (24) einströmenden Luftstrom, **dadurch gekenntzeichnet dass** das Filterelement (21) als Faltenfilter mit rechteckiger Anströmfläche ausgebildet und die Umlenkgeometrie des Luftleitelements (27) strömungsgünstig so gestaltet ist, dass sie den durch die kreisrunde Form der Staubeinbtasöffnung (24) bedingten Eintrittsquerschnitt des Luftstroms in einen an die Form der rechteckigen Anströmfläche des Filterelements (21) angepassten Austrittsquerschnitt des Luftstroms transformiert und Ein- und Austrittsquerschnitt in etwa die gleiche Größe haben.

2. Staubauffangbehälter nach Anspruch 1, **dadurch gekennzeichnet, dass** die Staubeinblasöffnung (24) in einer Stirnwand (112) eines Boden (111) und vom Boden (111) abstehende Seiten- und Stirnwände (113, 112) aufweisenden Behälterunterteils (11), in dem die Staubsammelkammer (22) ausgebildet und das Luftleilelement (27) angeordnet ist, und das Filterelement (21) an der Unterseite eines den Behäherunterteii (11) staubdicht verschließenden und eine Vielzahl von Luftauslritlsleichern (20) aufweisenden Deckels (12) angeordnet ist.

3. Staubauffangbehälter nach Anspruch 2, **dadurch gekennzeichnet, dass** der Deckel (12) kappenförmig ausgebildet ist, dass im Deckel (12) im Abstand von der die Anströmfläche bildenden Stirnfläche (211) des Filterelements (21) eine bis zum Kappenboden und den Kappenseitenwänden sich erstreckende Querwand (29) angeordnet ist und dass bei auf dem Bchälterunterteil (11) aufsitzendem Deckel (12) die Querwand (29) mit der die Staubeinblasöffnung (24) tragenden Stirnwand (112) des Behälterunterteils (11) fluchtet und eine von der Stirnwand (112) beabstandete obere Begrenzungskante des Luftleitelements (27) nahe der Unterkante der Stirnfläche (211) des Filterelements (21) liegt.

4. Staubauffangbehälter nach Anspruch 3, **dadurch gekennzeichnet, dass** die obere Begrenzungskante des Luftleitelements (27) mindestens so hoch über den Boden (111) des Behälterunterteils (11) liegt, dass sie mit der Oberkante der Staubcinblasöffnung (24) fluchtet.

5. Stauliautiangbehälter nach einem der Ansprüche 2 bis 4, **dadurch gekennzeichnet, dass** die Umlenkgeometrie von drei aneinandergrenzenden Luftleitflächen (30, 31, 32) gebildet ist, die an der die Staubeinblasöffnung (24) aufweisenden Stirnwand (112) des Behälterunterteils (11) ansetzen und in drei rechtwinklig zueinander ausgerichteten Richtungen von der Unterkante der Staubeinblasöffnung (24) aus schräg nach oben verlaufen, und dass von den drei Luftleitflächen (30, 31, 32) eine erste Luftleitfläche (30) sich in Richtung der Achse der Staubeinblasöffnung (21) hin zur Unterkante der Stirnfläche (211) des Filterelements (21) erstreckt und die beiden anderen Luftleitflächen (31, 32) an der Stirnwand (112) des Behälterunterteils (11) entlang mit nach oben zunehmendem, quer zur Achse der Staubeinblasöffnung (24) sich erstreckendem Abstand voneinander verlaufen.

6. Staubauffangbehälter nach Anspruch 5, **dadurch gekennzeichnet, dass** die oberen Enden der drei Luftleitflächen (30, 31, 32) die obere Begrenzungskante des Luftleitelements (27) bilden, die zusammen mit der oberen Begrenzungskante der Stirnwand (112) des Bchältcrunterteils (11) den Austrittsquerschnitt des Luftstroms festlegt.

7. Staubauffangbehälter nach Ansprusch 5 oder 6, **dadurch gekennzeichnet, dass** die erste Luftleitfläche (30) in ihrern an der Stirnwand (112) des Behälterunterteils (11) ansetzenden unteren Flächenbereich parabelartig gekrümmt ist.

8. Staubauffangbehälter nach einem der Anspruche 2 bis 7, **dadurch gekennzeichnet, dass** auf der von der Staubcinblasöffnung (24) wegweisenden Rückseite des Luftleitelements (27) eine von dessen oberer Begrenzungskante sich bis hin zum Boden (111) des Behälterunterteils (11) erstreckende Trennwand (23) angeordnet ist, die die Staubsammelkammer (22) an deren Vorderseite begrenzt.

9. Staubauffangbehälter nach einem der Ansprüche 2 bis 8, **dadurch gekennzeichnet, dass** Länge
und Breite der Staubsammelkammer (22) auf die Abmessungen des Filterelements (21) abgestimmt sind und die Staubsammekanmuer (22) unmittelbar unterhalb des Filterelements (21) liegt.

10. Staubauffangbehälter nach einem der Ansprüche 2 bis 9, **dadurch gekennzeichnet, dass** die Staubeinblasöffnung (24) von einem sich von der Stirnwand (112) einstückig fortsetzenden Staubeinblasstutzen (25) umschlossen ist, der zum staubdichten Aufsetzen auf einen Staubausblasstutzen (26) der Handwerkzeugmaschine ausgebildet ist.

11. Staubauffangbehälter nach einem der Ansprüche 2 bis 10, **dadurch gekennzeichnet, dass** zwischen der umlaufenden Oberkante des Behälterunterteils (11) und der damit passgenau umlautenden Unterkante des haubenförmigen Deckels (12) eine Dichtung (13) einliegt, die mittels eines zwischen Behälterunterteil (11) und Deckel (12) wirksamen, lösbaren Spannverschlusses (16) kraftschlüssig zwischen Behälterunterteil (11) und Deckel (12) eingepresst ist.

12. Staubauffangbehälter nach Anspruch 11, **dadurch gekennzeichnet, dass** der Spannverschluss (16) einen an der hinterem Stirnwand (112), die von der die Staubeinblasöffnung (24) aufweisenden Stirnwand (112) des Behätterunterteils (11) abgekehrt ist, schwenkbar angeordneten Spannhebel (17) mit Spannbügel (18) und eine am Deckel (12) abstehende Einhängenase (19) aufweist, die von dem Spannbügel (18) übergreifbar ist.

13. Staubauffangbehälter nach Anspruch 12, **dadurch gekennzeichnet, dass** der Deckel (122) an seinem von der Einhängenase (19) abgekehrten, vorderen Ende mittels Rastausnehmungen (15) in am Behältcrunterteil (11) ausgebildeten Rasthaken (14) einhängbar ist.

## Claims

1. Dust collection container for a portable power tool, comprising a circular dust blow-in opening (24), comprising a filter element (21) having a flow impingement surface, comprising a dust collecting chamber (22) and comprising an air guide element (27) which is arranged downstream of the dust blow-in opening (24) in the dust blow-in direction and has a deflecting geometry for the air flow flowing in via the dust blow-in opening (24), **characterized in that** the filter element (21) is designed as a folded filter having a rectangular flow impingement surface and the deflecting geometry of the air guide element (27) is configured in such a fluidically favourable manner that it transforms the inlet cross section of the air flow, said inlet cross section resulting from the circular shape of the dust blow-in opening (24), into an outlet cross section of the air flow, said outlet cross section being adapted to the shape of the rectangular flow impingement surface of the filter element (21), and the inlet cross section and the outlet cross section have approximately the same size.

2. Dust collection container according to Claim 1, **characterized in that** the dust blow-in opening (24) is formed in an end wall (112) of a container bottom part (11) which has a base (111) and side and end walls (113, 112) projecting from the base (111) and in which the dust collecting chamber (22) is formed and the air guide element (27) is arranged, and the filter element (21) is arranged on the underside of a lid (12) which closes the container bottom part (11) in a dust-tight manner and which has a multiplicity of air outlet holes (20).

3. Dust collecting container according to Claim 2, **characterized in that** the lid (12) is of cap-shaped design, **in that** a transverse wall (29) extending to the cap base and to the cap side walls is arranged in the lid (12) at a distance from the end face (211) of the filter element (21), said end face (211) forming the flow impingement surface, and **in that**, when the lid (12) is seated on the container bottom part (11), the transverse wall (29) is in alignment with the end wall (112) of the container bottom part (11), said end wall (112) having the dust blow-in opening (24), and a top boundary edge, at a distance from the end wall (112), of the air guide element (27) lies close to the bottom edge of the end face (211) of the filter element (21).

4. Dust collection container according to Claim 3, **characterized in that** the top boundary edge of the air guide element (27) lies at least so high above the base (111) of the container bottom part (11) that it is in alignment with the top edge of the dust blow-in opening (24).

5. Dust collection container according to one of Claims 2 to 4, **characterized in that** the deflecting geometry is formed by three adjacent air guide surfaces (30, 31, 32) which start at the end wall (112) of the container bottom part (11), said end wall (112) having the dust blow-in opening (24), and run obliquely upwards from the bottom edge of the dust blow-in opening (24) in three directions oriented at right angles to one another, and **in that**, of the three air guide surfaces (30, 31, 32), a first air guide surface (30) extends in the direction of the axis of the dust blow-in opening (24) to the bottom edge of the end face (211) of the filter element (21) and the two other air guide surfaces (31, 32) run along the end wall (112) of the container bottom part (11) at a distance apart which increases towards the top and extends transversely to the axis of the dust blow-in opening (24).

6. Dust collection container according to Claim 5, **characterized in that** the top ends of the three air guide surfaces (30, 31, 32) form the top boundary edge of the air guide element (27), which top boundary edge together with the top boundary edge of the end wall (112) of the container bottom part (11) establishes the outlet cross section of the air flow.

7. Dust collection container according to Claim 5 or 6, **characterized in that** the first air guide surface (30) is curved in a parabolic manner in its bottom surface region starting at the end wall (112) of the container bottom part (11).

8. Dust collection container according to one of Claims 2 to 7, **characterized in that** a dividing wall (23) is arranged on the rear side of the air guide element (27) pointing away from the dust blow-in opening (24), which dividing wall (23) extends from the top boundary edge of said air guide element (27) towards the base (111) of the container bottom part (11) and defines the dust collecting chamber (22) at the front side thereof.

9. Dust collection container according to one of Claims 2 to 8, **characterized in that** the length and the breadth of the dust collecting chamber (22) are matched to the dimensions of the filter element (21), and the dust collecting chamber (22) lies directly below the filter element (21).

10. Dust collection container according to one of Claims 2 to 9, **characterized in that** the dust blow-in opening (24) is enclosed by a dust blow-in connecting piece (25) which continues integrally from the end wall (112) and which is designed for attaching to a dust blow-out connecting piece (26) of the portable power tool in a dust-tight manner.

11. Dust collection container according to one of Claims 2 to 10, **characterized in that** a seal (13) is located between the encircling top edge of the container bottom part (11) and the bottom edge, encircling therewith in an accurately fitting manner, of the hood-shaped lid (12), which seal (13) is pressed frictionally into place between container bottom part (11) and lid (12) by means of a releasable toggle-type fastener (16) effective between container bottom part (11) and lid (12).

12. Dust collection container according to Claim 11, **characterized in that** the toggle-type fastener (16) has a clamping lever (17) with clamping stirrup (18), said clamping lever (17) being pivotably arranged on the rear end wall (112) which is remote from the end wall (112) of the container bottom part (11) having the dust blow in opening (24), and a mounting lug (19) which projects on the lid (12) and over which the clamping stirrup (18) can reach.

13. Dust collection container according to Claim 12, **characterized in that** the lid (122), at its front end remote from the mounting lug (19), can be mounted in latching hooks (14), formed on the container bottom part (11), by means of latching apertures (15).

## Revendications

1. Récipient collecteur de poussière pour une machine-outil portative, comprenant une ouverture de soufflage de poussière (24) ronde circulaire, un élément filtrant (21) présentant une surface d'afflux, une chambre de collecte de poussière (22) et un élément de guidage d'air (27) disposé en aval de l'ouverture de soufflage de poussière (24) dans la direction de soufflage de la poussière, avec une géométrie de déviation pour le flux d'air affluant par le biais de l'ouverture de soufflage de poussière (24), **caractérisé en ce que** l'élément filtrant (21) est réalisé sous forme de filtre à plis avec une surface d'afflux rectangulaire et la géométrie de déviation de l'élément de guidage d'air (27) est configurée de manière favorable à l'écoulement de telle sorte qu-'- elle transforme la section transversale d'entrée du flux d'air causée par la forme ronde circulaire de l'ouverture de soufflage de poussière (24) en une section transversale de sortie du flux d'air adaptée à la forme de la surface d'afflux rectangulaire de l'élément filtrant (21), la section transversale d'entrée et la section transversale de sortie ayant approximativement la même taille.

2. Récipient collecteur de poussière selon la revendication 1, **caractérisé en ce que** l'ouverture de soufflage de poussière (24) est réalisée dans une paroi frontale (112) d'une partie inférieure du récipient (11) présentant un fond (111) et des parois latérales et frontales (113, 112) partant du fond (111), dans laquelle la chambre de collecte de poussière (22) est réalisée et dans laquelle est disposé l'élément de guidage d'air (27), et l'élément filtrant (21) est disposé sur le côté inférieur d'un couvercle (12) fermant la partie inférieure du récipient (11) de manière étanche à la poussière et présentant une pluralité de trous de sortie d'air (20).

3. Récipient collecteur de poussière selon la revendication 2, **caractérisé en ce que** le couvercle (12) est réalisé en forme de chapeau, **en ce que** dans le couvercle (12), à distance de la surface frontale (211) de l'élément filtrant (21) formant la surface d'afflux, est disposée une paroi transversale (29) s'étendant jusqu'au fond du chapeau et jusqu'aux parois latérales du chapeau, et **en ce que** lorsque le couvercle (12) repose sur la partie inférieure du récipient (11), la paroi transversale (29) est en affleurement avec la paroi frontale (112) de la partie inférieure du récipient (11) portant l'ouverture de soufflage de poussière (24), et une arête de limitation supérieure de l'élément de guidage d'air (27), espacée de la paroi frontale (112), se situe à proximité de l'arête inférieure de la surface frontale (211) de l'élément filtrant (21).

4. Récipient collecteur de poussière selon la revendication 3, **caractérisé en ce que** l'arête de limitation supérieure de l'élément de guidage d'air (27) se situe au moins suffisamment haut au-dessus du fond (111) de la partie inférieure du récipient (11), pour être en affleurement avec l'arête supérieure de l'ouverture de soufflage de poussière (24).

5. Récipient collecteur de poussière selon l'une quelconque des revendications 2 à 4, **caractérisé en ce que** la géométrie de déviation est formée par trois surfaces de guidage d'air adjacentes (30, 31, 32) qui s'appliquent contre la paroi frontale (112) de la partie inférieure du récipient (11) qui présente l'ouverture de soufflage de poussière (24) et s'étendent obliquement vers le haut dans trois directions orientées perpendiculairement les unes aux autres depuis l'arête inférieure de l'ouverture de soufflage de poussière (24), et **en ce que** sur les trois surfaces de guidage d'air (30, 31, 32), une première surface de guidage d'air (30) s'étend dans la direction de l'axe de l'ouverture de soufflage de poussière (24) jusqu'à l'arête inférieure de la surface frontale (211) de l'élément filtrant (21) et les deux autres surfaces de guidage d'air (31, 32) s'étendent le long de la paroi frontale (112) de la partie inférieure du récipient (11) avec une distance l'une de l'autre croissant vers le haut, s'étendant transversalement à l'axe de l'ouverture de soufflage de poussière (24).

6. Récipient collecteur de poussière selon la revendication 5, **caractérisé en ce que** les extrémités supérieures des trois surfaces de guidage d'air (30, 31, 32) forment l'arête de limitation supérieure de l'élément de guidage d'air (27), qui définit, conjointement avec l'arête de limitation supérieure de la paroi frontale (112) de la partie inférieure du récipient (11), la section transversale de sortie du flux d'air.

7. Récipient collecteur de poussière selon la revendication 5 ou 6, **caractérisé en ce que** la première surface de guidage d'air (30) est courbée en forme de parabole dans sa région de surface inférieure s'appliquant contre la paroi frontale (112) de la partie inférieure du récipient (11).

8. Récipient collecteur de poussière selon l'une quelconque des revendications 2 à 7, **caractérisé en ce que** sur le côté arrière de l'élément de guidage d'air (27) opposé à l'ouverture de soufflage de poussière (24) est disposée une paroi de séparation (23) s'étendant depuis son arête de limitation supérieure jusqu'au fond (111) de la partie inférieure du récipient (11), laquelle limite la chambre de collecte de poussière (22) au niveau de son côté avant.

9. Récipient collecteur de poussière selon l'une quelconque des revendications 2 à 8, **caractérisé en ce que** la longueur et la largeur de la chambre de collecte de poussière (22) sont adaptées aux dimensions de l'élément filtrant (21) et la chambre de collecte de poussière (22) se situe directement en dessous de l'élément filtrant (21).

10. Récipient collecteur de poussière selon l'une quelconque des revendications 2 à 9, **caractérisé en ce que** l'ouverture de soufflage de poussière (24) est entourée par une tubulure de soufflage de poussière (25) se poursuivant d'une seule pièce depuis la paroi frontale (112), laquelle est réalisée pour être placée de manière étanche à la poussière sur une tubulure d'expulsion de poussière (26) de la machine-outil portative.

11. Récipient collecteur de poussière selon l'une quelconque des revendications 2 à 10, **caractérisé en ce qu'**entre l'arête supérieure périphérique de la partie inférieure du récipient (11) et l'arête inférieure périphérique exactement ajustée du couvercle en forme de capot (12) est inséré un joint (13) qui est pressé par engagement par force entre la partie inférieure du récipient (11) et le couvercle (12) au moyen d'une fermeture par serrage (16) desserrable, agissant entre la partie inférieure du récipient (11) et le couvercle (12).

12. Récipient collecteur de poussière selon la revendication 11, **caractérisé en ce que** la fermeture par serrage (16) présente un levier de serrage (17) disposé de manière pivotante sur la paroi frontale arrière (112) qui est opposée à la paroi frontale (112) de la partie inférieure du récipient (11) présentant l'ouverture de soufflage de poussière (24), avec un étrier de serrage (18) et un nez d'accrochage (19) saillant sur le couvercle (12), qui peut être saisi par le dessus par l'étrier de serrage (18).

13. Récipient collecteur de poussière selon la revendication 12, **caractérisé en ce que** le couvercle (12) peut être accroché à son extrémité avant opposée au nez d'accrochage (19) au moyen d'évidements d'encliquetage (15) dans des crochets d'encliquetage (14) réalisés sur la partie inférieure du récipient (11).
